# EUROPEAN PATENT SPECIFICATION

(11) **EP 2 707 228 B1**
(45) Date of publication and mention of the grant of the patent: **19.08.2015**
(21) Application number: 12721336.1
(22) Date of filing: 03.05.2012
(51) Int. Cl.: B42D 15/00, G02B 3/06, G02B 27/22, B42D 25/29, B42D 25/00

(54) **SECURITY DEVICE**
SICHERHEITSVORRICHTUNG
DISPOSITIF DE SÉCURITÉ

(30) Priority: 09.05.2011 GB 201107657
(43) Date of publication of application: 19.03.2014
(73) Proprietor: De La Rue International Limited, Basingstoke, Hampshire RG22 4BS (GB)
(72) Inventor: HOLMES, Brian William, Fleet Hampshire GU51 5HZ (GB)
(74) Representative: Skone James, Robert Edmund
(86) International application number: PCT/GB2012/050963
(87) International publication number: WO 2012/153106

(56) References cited:
- WO-A2-2011/051670
- US-B1- 6 369 949

## Description

The invention relates to a security device, for example for use on articles of value such as banknotes, cheques, passports, identity cards, certificates of authenticity, fiscal stamps and other documents for securing value or personal identity.

Many different optical security devices are known of which the most common are holograms and other diffractive devices which are often found on credit cards and the like. It is also known to provide security devices in the form of moire magnifiers as, for example, described in EP-A-1695121 and WO-A-94/27254. A disadvantage of moire magnifiers is that the artwork is more restricted, for instance an animation effect would not be possible with a moire magnifier. It has also been known that so-called lenticular devices can be used as security devices as, for example, described in US-A-4892336. However, these devices have been difficult to verify by the untrained observer. In the above approaches there is a need for a very precise register between the microlenses and printing. In fact, in US-A-4892336 this need for precise register is put forward as one of the advantages of that invention in that it makes it very much more difficult to counterfeit such security devices. On the other hand, for a security device to be useful commercially, genuine devices must be relatively easy to manufacture since otherwise production costs will be prohibitive.

US-A-4765656 also describes a security device made using a lenticular screen and in this case the microimages are formed by direct laser writing through the microlenses which are already in situ in the device. Again, this approach is not suited to mass production techniques although it does achieve exact register between the lenses and images.

Further examples of lenticular devices are described in WO-A-2011/051668, US-A-6016225 and US-B-7359120.

In most lenticular devices, it is a requirement to register the cylindrical lens array with the underlying sets of image strips. However, with reducing lens periodicity or pitch, provision of this register becomes increasingly difficult to maintain during the manufacturing process resulting in a scenario where the two arrays may no longer have the desired register. This has drawbacks in that it is more difficult to control when successive switches occur between images and also it is not possible accurately to determine which image will be seen at any particular viewing angle. This is undesirable in the case of a security device.

WO 2011/051670 further describes a lenticular security device wherein at different viewing angles image strips are viewed by respective focusing elements and are defined by a relief structure.

In accordance with a first aspect of the present invention, we provide a security device having a lenticular device comprising an array of lenticular focusing elements; a corresponding array of sets of image strips, the sets of image strips having substantially the same periodicity as, or an integral multiple of the periodicity of, the array of lenticular focusing elements, wherein the image strips are formed and the focusing elements located relative to the image strips such that at each of a plurality of viewing angles, a respective one image strip from each set is viewed in response to incident light falling on a respective lenticular focusing element, the image strips being constructed such that the device presents a cyclically repeating sequence of images as the device is viewed at successive viewing angles, the image sequence comprising a change in form of an image between a first form and a second form and then a reversal of the sequence back to the first form, the combined image sequences presenting a contiguous variation in the image form.

In accordance with a second aspect of the present invention, a method of manufacturing a security device comprises providing a lenticular device comprising an array of lenticular focusing elements and a corresponding array of sets of image strips, the sets of image strips having substantially the same periodicity as, or an integral multiple of the periodicity of, the array of lenticular focusing elements, wherein the image strips are formed and the focusing elements located relative to the image strips such that at each of a plurality of viewing angles, a respective one image strip from each set is viewed in response to incident light falling on a respective lenticular focusing element, the image strips being constructed such that the device presents a cyclically repeating sequence of images as the device is viewed at successive viewing angles, the image sequence comprising a change in form of an image between a first form and a second form and then a reversal of the sequence back to the first form, the combined image sequences presenting a contiguous variation in the image form.

We have developed a lenticular device for use as a security device which does not require registration between the lenticular focusing elements on the one hand and the sets of image strips on the other thus making it easier to manufacture but which generates the effect of a cyclic change in form, such as an expansion and contraction and/or change in shape, of an image. The snapshot of each set of images is such that the number of steps relating to the first part of the sequence is preferably equal to the number of steps related to the second part of the sequence during which the first part is reversed.

In a preferred example the series of contraction steps and the change in image size between each contraction step mirrors the series of expansion steps and the change in image size between each expansion step.

In the preferred examples, the first and second forms have the same shape but are for example of different size (contracted and expanded respectively) but in other examples, the sequence may involve a change in shape of the image. For example, the image could change from a circle to a star and then back to a circle. In this case, there will be a contiguous set of intermediate images in between the two complimentary shapes

In some cases, the image strips defining the first form of the image at the end of one sequence also define the first form of the image at the beginning of the next sequence.

In other cases, the image strips at the beginning and end of each sequence have half the width of the other image strips.

The reasoning behind the use of a half strip is as follows:
Suppose the animation sequence was purely symmetric i.e. the last symbol and the first symbol are the same i.e. **1,2,3,2,1**
Now for the conventional cyclic option wherein the last strip of the first sequence is dropped and we revert back to the first element of the next sequence - then at one viewing angle tilt we will never see that full sequence
Instead in
   - a registered scenario we might see: **1,2,3,2**
   - or in a mis-registered scenario we might see **3,2,1,2,** or **2,3,2,1**
In the half strip version, strips are provided for the full symmetric scenario 1, **1,2,3,2,1**
   - therefore in a registered scenario we have **1, 2,3,2,1**
   - or in a mis-registered scenario we have **3,2,1,1,2** or **2,3,2,1,1**

Clearly we see that the missed strip and half strip scenarios perform the same in the mis-register scenarios - however the half width works better in scenarios were the array is registered either fortuitously or by design.

The lenticular focusing elements typically comprise cylindrical lenses but could also comprise micromirrors. The periodicity and therefore maximum base diameter for the lenticular focussing elements is preferably in the range 5-200µm, more preferably 10-60µm and even more preferably 20-40µm. The f number for the lenticular focussing elements is preferably in the range 0.25-16 and more preferably 0.5-2.

The image strips can be simply printed onto the substrate although it is also possible to define the image strips using a relief structure. This enables much thinner devices to be constructed which is particularly beneficial when the security device is used with security documents.

The relief structures can be formed by embossing or cast-curing. Of the two processes mentioned, cast-curing provides higher fidelity of replication.

A variety of different relief structures can be used as will be described in more detail below. However, the image strips could simply be created by embossing/cast-curing the images as diffraction grating areas. Differing parts of the image could be differentiated by the use of differing pitches or different orientations of grating. Alternative (and/or additional differentiating) image structures are anti-reflection structures such as moth-eye (see for example WO-A-2005/106601), zero-order diffraction structures, stepped surface relief optical structures known as Aztec structures (see for example WO-A-2005/115119) or simple scattering structures. For most applications, these structures could be partially or fully metallised to enhance brightness and contrast.

Typically, the width of each image strip formed by a relief or by printing is less than 50 microns, preferably less than 20 microns, most preferably in the range 1-10 microns. For printed strips the minimal achievable line width will be > than 1 um and more typically 5um or more. The upper limit will remain at 50um consistent with the maximum lens base diameter and periodicity of 200um.

The security device can be used as a stand alone device but could also include other devices. For example, the image strips may be provided in a substrate which is also provided with a holographic structure, separate from the lenticular device.

Microimages suitable for moire magnification could be provided on a substrate with a moire magnification lens array located over the microimages. This moire magnification lens array could be provided in or on the same surface as the lenticular focusing elements.

The security device may comprise a metallised layer either as part of the image structures or as an additional layer. Preferably such a layer is selectively demetallised at a number of locations. In addition the device may further comprise a layer of resist upon the metallised layer. The metallised layer and/or the layer of resist are preferably arranged as indicia.

It is also preferred that the device is arranged to be machine-readable. This may be achieved in a number of ways. For example at least one layer of the device (optionally as a separate layer) may further comprise machine-readable material. Preferably the machine-readable material is a magnetic material, such as magnetite. The machine-readable material may be responsive to an external stimulus. Furthermore, when the machine-readable material is formed into a layer, this layer may be transparent.

The security device may be used in many different applications, for example by attachment to objects of value. Preferably, the security device is adhered to or substantially contained within a security document. The security device may therefore be attached to a surface of such a document or it may be partially embedded within the document. The security device may take various different forms for use with security documents, these including a security thread, a security fibre, a security patch, a security strip, a security stripe or a security foil as non-limiting examples.

Some examples of security devices and methods according to the invention will now be described and contrasted with a known device with reference to the accompanying drawings, in which:-
Figure 1 is a schematic cross-section through a known lenticular device;
Figure 2 is a perspective view from above of a modified form of the known lenticular device of Figure 1;
Figure 3 illustrates the appearance of the device of Figure 2 at different tilt angles;
Figure 4 is a schematic cross-section similar to Figure 1 but through a comparative example;
Figure 5 illustrates the images seen at different viewing angles for the device of Figure 4;
Figure 6 shows the views of Figure 5 but illustrating the progression of the animation sequence;
Figure 7 is a view similar to Figure 4 but in which the image strips are not registered to the lenticular lenses;
Figure 8 is a view similar to Figure 6 but showing the animation sequence for the Figure 7 example;
Figure 9 illustrates the images seen at different viewing angles of an example of a device according to the invention in the initial or particular scenario in which the image strips are registered to the lenticular lenses;
Figure 10 is a schematic cross-section through the device used to create the images of Figure 9;
Figure 11 illustrates the animation sequence on tilting the device shown in Figure 10;
Figure 12 is a view similar to Figure 10 but in which the image strips are not registered to the lenticular lenses;
Figure 13 is a view similar to Figure 11 but for the Figure 12 device;
Figure 14a illustrates another example of an image sequence and Figure 14b illustrates the full sequence observed as the device is tilted;
Figure 15 is a schematic cross-section through the device used to form the image sequence shown in Figure 14;
Figure 16a illustrates another repeating sequence and Figure 16b the appearance of that sequence as the device is tilted;
Figure 17 is a view similar to Figure 15 but in which the image strips are not registered with lenticular lenses;
Figures 18a and 18b are views similar to Figures 16a and 16b respectively but for the device shown in Figure 17;
Figures 19 and 20 illustrate further examples of image sequences;
Figure 21 illustrates a pumping device image;
Figure 22 is a schematic cross-section through a further example of a device according to the invention;
Figure 23 illustrates the appearance of the device shown in Figure 22 as it is tilted;
Figure 24 illustrates a security thread according to the invention;
Figures 25A-25I illustrate different ways of implementing the relief structure for the image strips;
Figure 26 illustrates the steps involved in a method of manufacturing a security device according to the invention;
Figures 27a and 27b illustrate schematically cross-sections through two different lenticular devices for creating complementary sequences;
Figures 28a to 28e illustrate a windowed security thread based on the Figure 27 example;
Figures 29a and 29b are schematic cross-sections through further examples of security devices according to the invention in a registered scenario and an unregistered scenario respectively;
Figures 30a and 30b illustrate the image sequences corresponding to Figures 29a and 29b respectively; and,
Figures 31 and 32 illustrate an animation sequence and the construction of a further example of a lenticular device for generating the animation sequence respectively in which multiple sets of images are provided under each microlens.

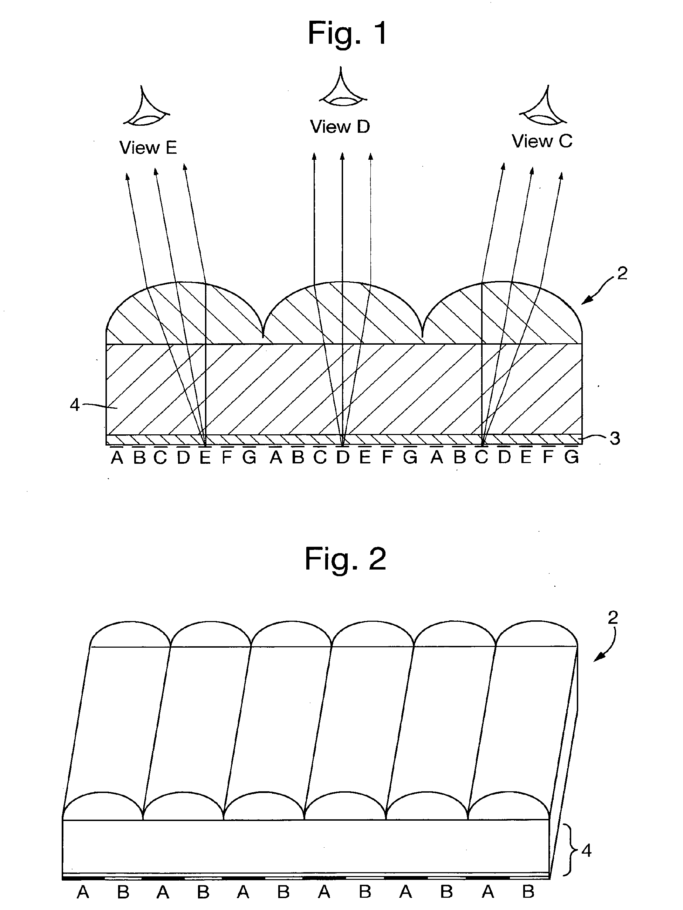

A known lenticular device is shown in Figures 1-3. Figure 1 shows a cross-section through the known lenticular device which is being used to view images A-G. An array of cylindrical lenses 2 is arranged on a transparent substrate 4. Alternatively, in this and the following examples, the lenses 2 could be formed directly in the substrate 4. Each image is segmented into a number of strips, for example 10 and under each lens 2 of the lenticular array, directly on substrate 4, or on or in a transparent layer 3 (as shown), there is provided a set of image strips corresponding to a particular segmented region of images A-G. Under the first lens the strips will each correspond to the first segment of images A-G and under the next lens the strips will each correspond to the second segment of images A-G and so forth. Each lens 2 is arranged to focus in the plane of the strips such that only one strip can be viewed from one viewing position through each lens 2. At any viewing angle, only the strips corresponding to one of the images (A,B,C etc.) will be seen through the corresponding lenses. As shown, each strip of image D will be seen from straight on whereas on tilting a few degrees off-axis the strips from images C or E will be seen.

The strips are arranged as slices of an image, i.e. the strips A are all slices from one image, similarly for B, C etc. As a result, as the device is tilted a series of images will be seen. The images could be related or unrelated. The simplest device would have two images that would flip between each other as the device is tilted. Alternatively, the images could be a series of images that are shifted laterally strip to strip generating a lenticular animation effect so that the image appears to move. Similarly, the change from image to image could give rise to more complex animations (parts of the image change in a quasi-continuous fashion), morphing (one image transforms in small steps to another image) or zooming (an image gets larger or smaller in steps).

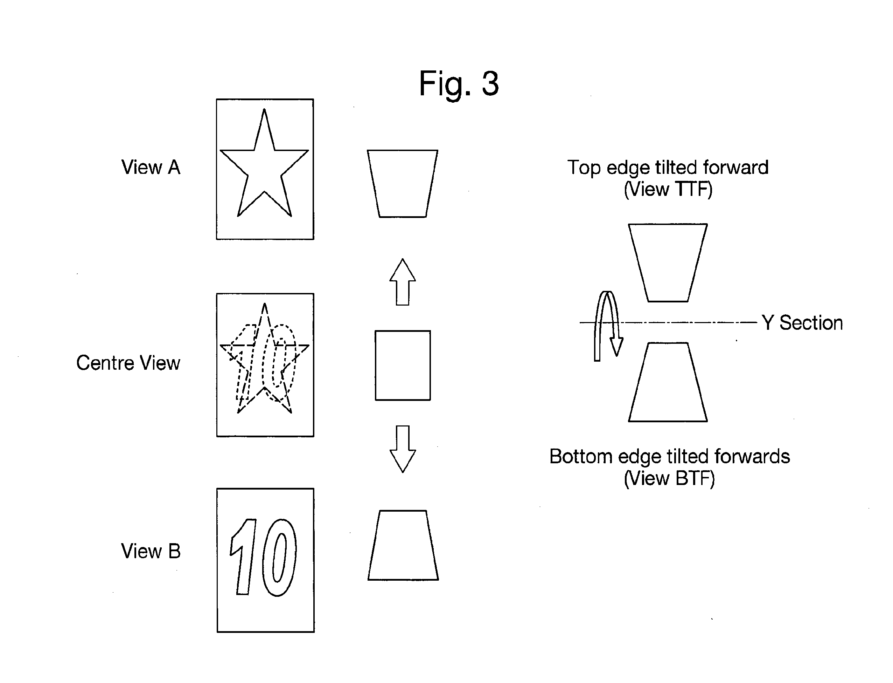

Figure 2 shows the lenticular device in perspective view although for simplicity only two image strips per lens are shown labelled A,B respectively. The appearance of the device shown in Figure 2 to the observer is illustrated in Figure 3. Thus, when the device is arranged with its top tilted forward (view TTF), the image strips A will be seen defining a star image while when the device is arranged with its bottom tilted forward (view BTF) then the image strips B defining a "10" will be seen.

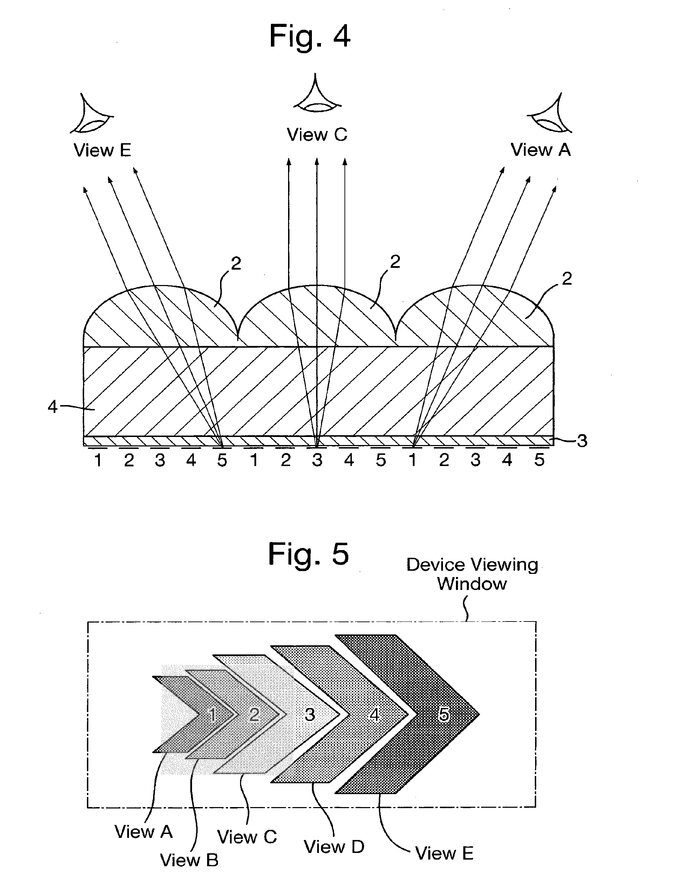

Figures 4-8 illustrate the problems associated with poor registration between the image strips and lenticular lenses in known devices. Figure 4 shows a cross-section through a further example of a lenticular device which is being used to view images 1-5 at viewing angles or views A-E respectively, with individual strips of the images being shown. Figure 5 illustrates the images seen at Views A-E. In this case there are a series of images 1-5 that are shifted laterally strip to strip generating a lenticular animation effect so that the image appears to move and in addition the image expands as this movement occurs. Thus each image 1-5 has the same shape (chevron) but is larger than its predecessor. The successive images also appear at successive locations to the right (in the direction of the chevron pointer). This expansion and movement is represented by the animation steps 1,2,3,4,5. In the Figure 4 example views A-E correspond directly to animation steps 1-5 as the image strips are registered to the lenticular lenses.

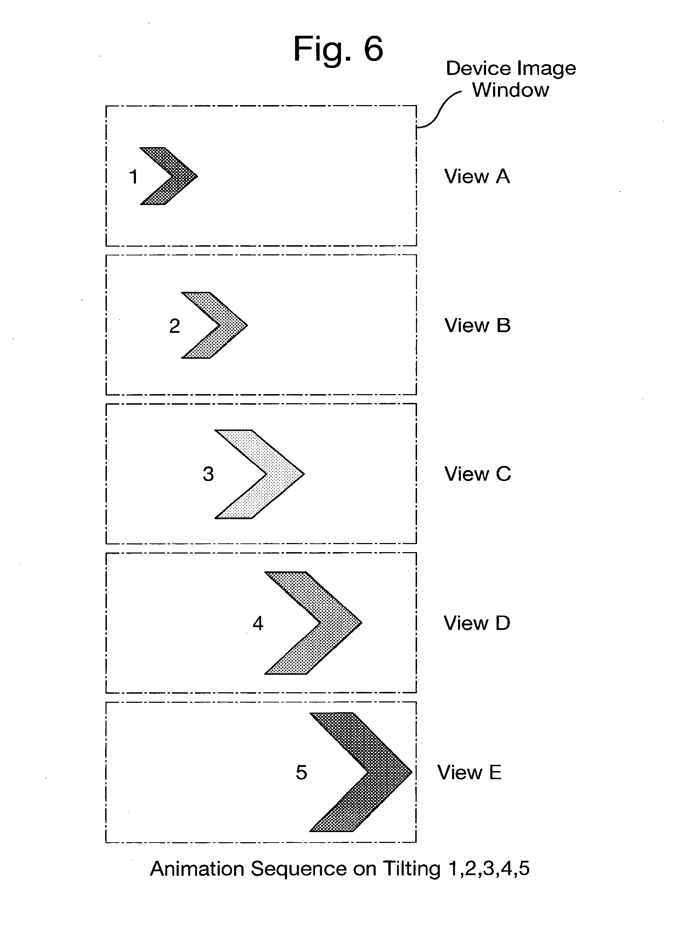

Figure 6 shows the progression of animation sequence on tilting from view A to view E for the case where the image strips are registered to the lenticular lenses. In this case the image is seen to expand sequentially and contiguously through animation steps 1-5 as the view is changed from A through to E.

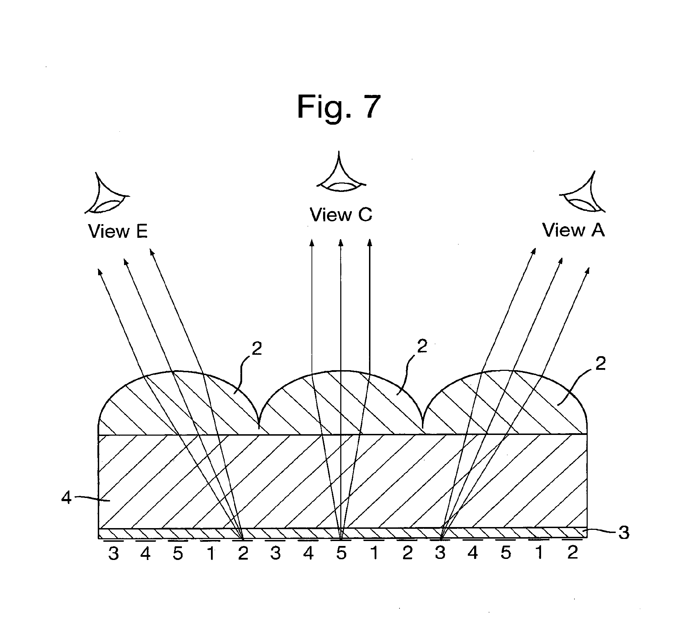

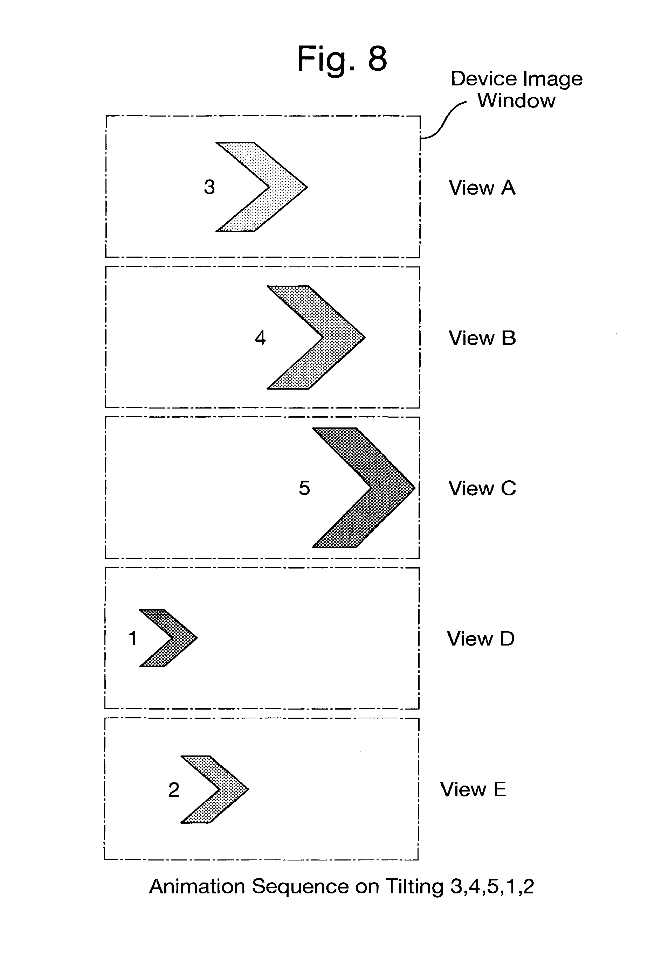

Figure 7 shows a similar cross-section to that shown in Figure 4 but in this case the image strips are not registered to the lenticular lenses. This could occur when it is not possible or it is technically challenging to control the registration and therefore it is not possible to control which part of the animation sequence is seen at which view. In the example in Figure 7 image 3 is now seen at view A and image 5 is now seen at view C etc. This results in a non contiguous or non progressive animation sequence in the final security device which would serve to confuse the obsever and is thus considered undesirable in respect of providing a consistent and predictable optically variable effect. This is illustrated in Figure 8 where on tilting the device the viewer will typically start at View A which now corresponds to animation step 3 and then on titling through View B and C will see a gradual expansion and movement through animation steps 4 and 5. The problem occurs when progressing from view C to view D as there is now a sudden jump in image size between animation steps 5 and 1 which doesn't correlate with the progressive or contiguous changes in the proceeding and or succeeding animation steps and is thus not desirable when the authenticator is expecting to see a gradual expansion. Furthermore if it is not possible to control the registration, this sudden jump will occur at different Views for different batches of the security device which leads to confusion in the mind of the authenticator.

The current invention removes the requirement of registering the image strips to the lenticular lenses by using an image sequence which exhibits a typically gradual cyclic variation in form e.g. contraction and expansion effect and this gradual change is observed irrespective of which animation step is observed at which view. This will now be illustrated in the following diagrams.

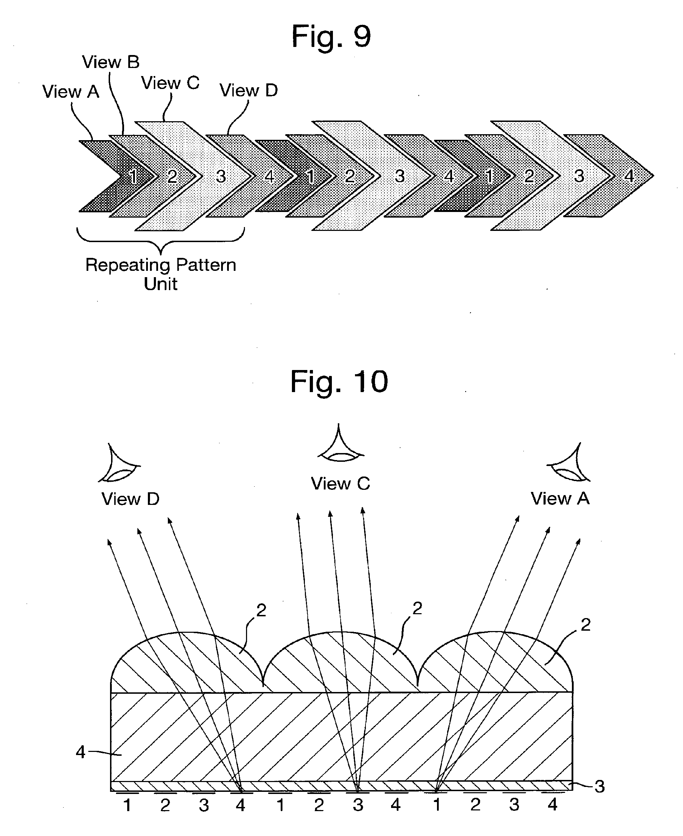

Figure 9 shows a cyclic expansion and contraction animation sequence suitable for use in the current invention. It can be seen that the contraction steps mirror the expansion steps in both the number of steps and the change in image size between them. Thus image 2 is the same shape and size as image 4 (although at a different location).

Figure 10 shows the cross-section of a lenticular device used to view the animation sequence through four views A to D, each defining the same viewing angle, and initially the image strips being registered to the lenses 2. One of the important aspects of this animation sequence is that the same image is used for the end and start of the animation sequence in this case the image strips used to represent the first image 1 in the animation sequence. Thus, the single sequence of images defined by the image strips does not form the complete sequence of images. This reduces the number of image strips that need to be provided but also leads to a more effective security device since the repeating sequence is truly continuous. Thus, if the image strips were of the same width and defined the complete sequence of images from image 1 back to image 1 then adjacent image sequences would present successive views of image 1. Thus image 1 would appear for twice as long as the other images as the devices was tilted which would lead to confusion in the mind of the authenticator.

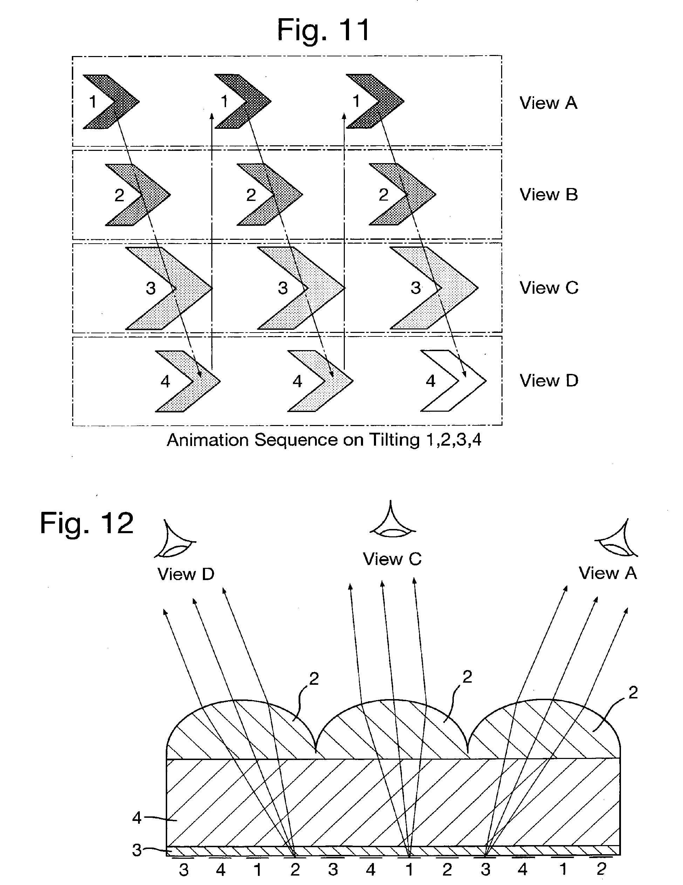

Figure 11 shows the progression of the sequence of images as the device of Figure 10 is tilted and viewed from views A-D for the case where the image strips are registered to the lenticular lenses. In this case the chevron shape is seen to expand and then contract sequentially or contiguously through animation steps 1-4 as the view is changed from A through to D and then back to A where both the end of the first sequence and start of the next sequence is observed.

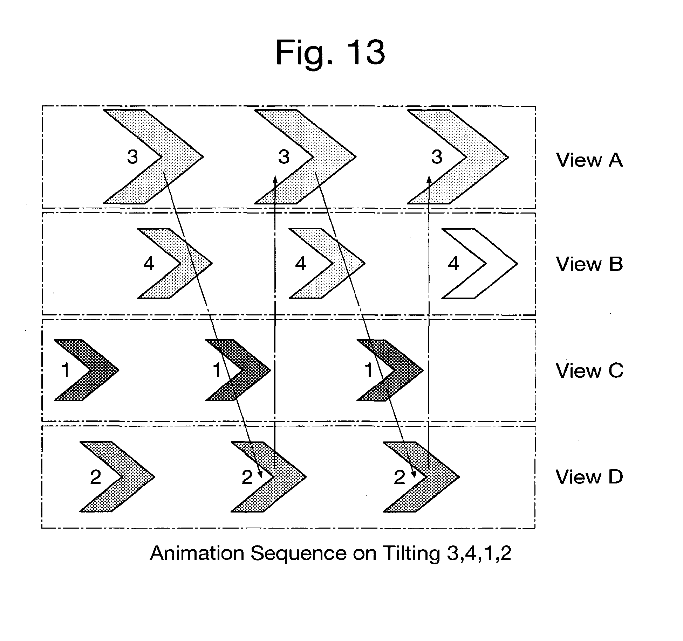

Figure 12 shows a similar cross-section to that shown in Figure 10 but in this case the image strips are no longer registered to the lenticular lenses 2. This would occur when it is not possible or it is technically challenging to control the registration and therefore it is not possible to control which part of the animation sequence is seen at which view. In the example in Figure 12 image 3 is now seen at view A and image 1 is now seen at view C etc. However unlike the previous example of Figures 4 to 8 we still maintain a contiguous animation sequence by which we mean each view is followed by its neighbouring element in the animation sequence therefore avoiding any undesirable non contiguous steps or jumps in the animation sequence in the final security device. This is illustrated in Figure 13 where although the viewer observes a different starting point in View A, i.e. image 3, he then observes a gradual contraction followed by expansion back to the initial starting point as he changes from view A through to view D and then back to View A. The cyclic nature of the animation sequence and the fact that the start and end of the sequence are represented by the same image results in a smooth expansion-contraction of the image irrespective of the registration, i.e. there is no longer a sudden jump in image size when the cycle restarts. The testable security feature is that on tilting the device the image initially observed (which will vary in size depending on the registration) is observed to go through a cyclic contraction-expansion animation where it will return to its starting size in a smooth manner. As shown in Figure 13 the animation can also comprise movement along the security device as well as the contraction and expansion effect.

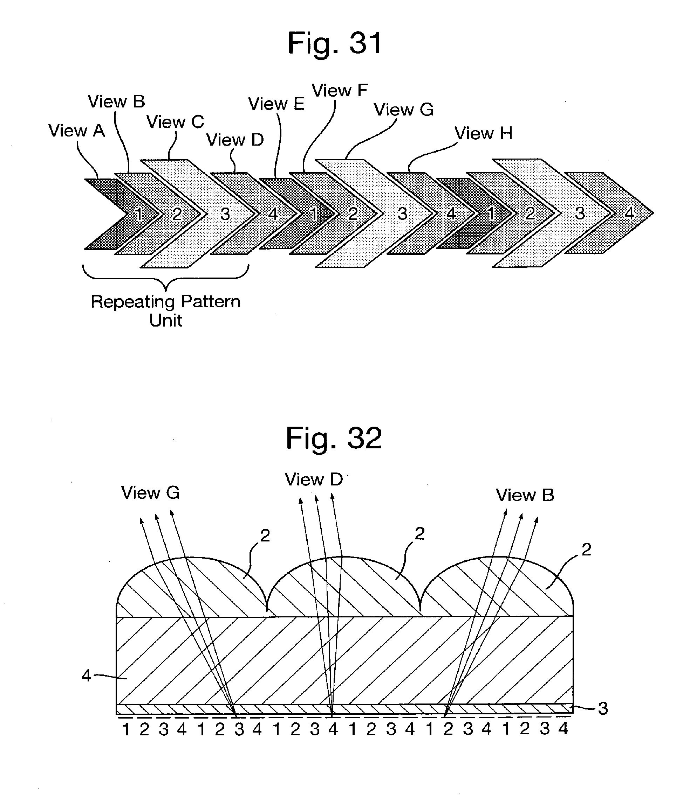

In all of the examples shown there is one set of image strips (for example 1-4) positioned under a lens such that every step of the sequence is positioned under one lens. It is also possible to put multiple sets of image strips under a lens, and this is illustrated in the cross-section of Figure 32 for the animation sequence shown in Figure 31. The advantage of this being that the observer will see more repeat cycles as the security device is tilted.

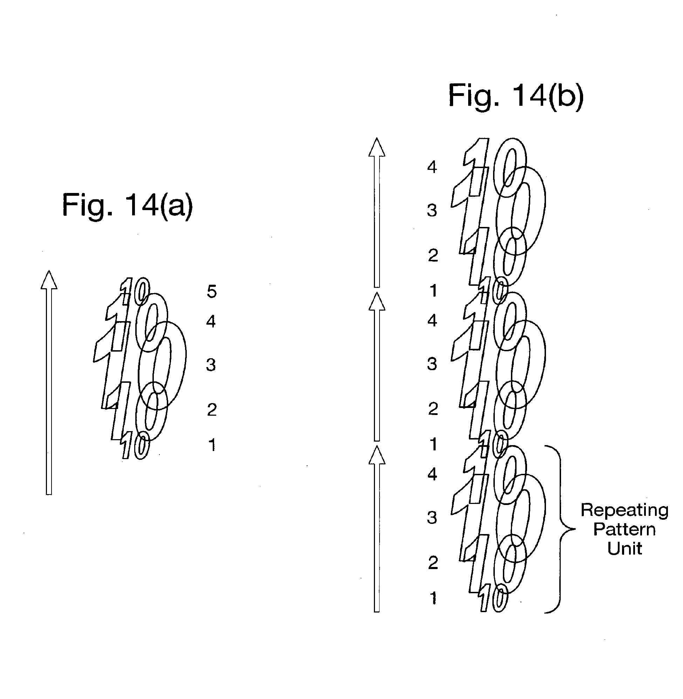

Figure 14 shows an alternative image animation sequence which is suitable for the current invention. Figure 14a shows the animation sequence combining steps 1 through 5 in which the numeral "10" expands and contracts. In order to make this sequence suitable for use in an unregistered lenticular device a repeating pattern unit 1-4 is created (Figure 14b) where image 1 now provides the image for steps 1 and 5 in Figure 14a (step 5 also constituting step 1 of the next sequence).

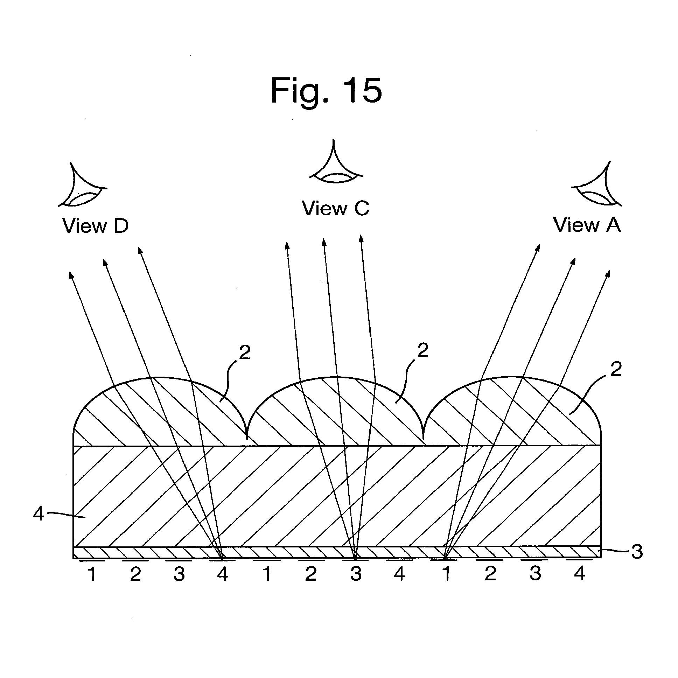

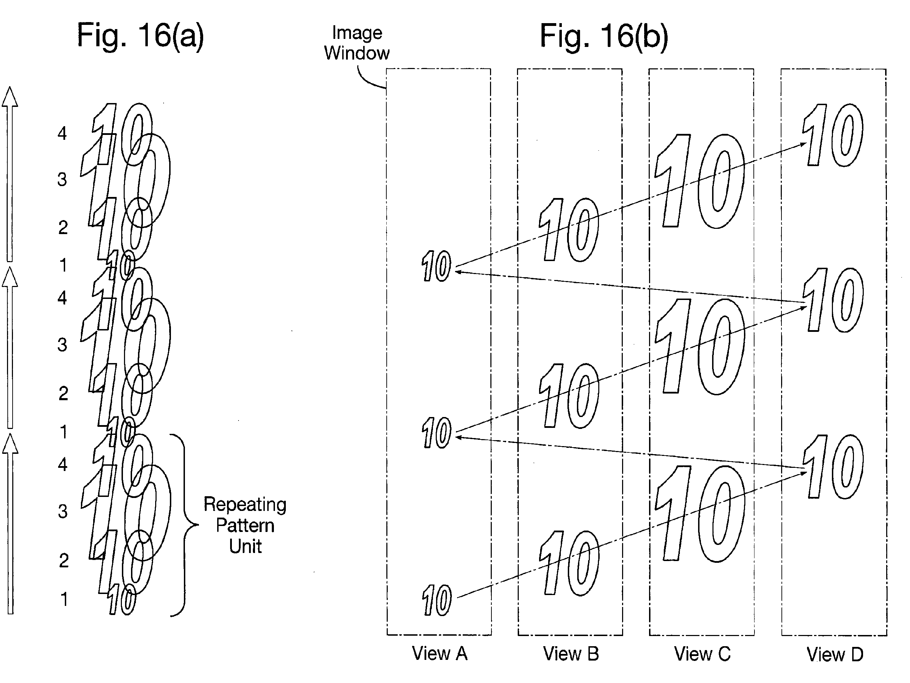

Figure 15 shows the cross-section of a lenticular device used to view the animation sequence through four views A to D in Figure 14b for the case where the image strips are registered to the lenticular lenses. Figure 16b shows the progression of animation sequence of images views A-D (Figure 16a) for such a registered scenario. In this case the image of the numeral "10" is seen to expand and then contract sequentially through animation steps 1-4 as it moves up the security device as the view is changed from A through to D and then back to A where both the end of the first sequence and start of the next sequence is observed.

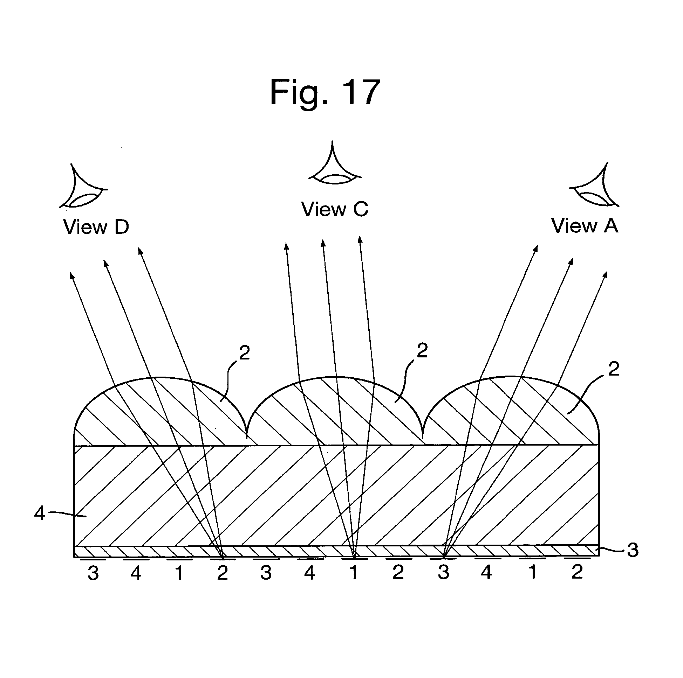

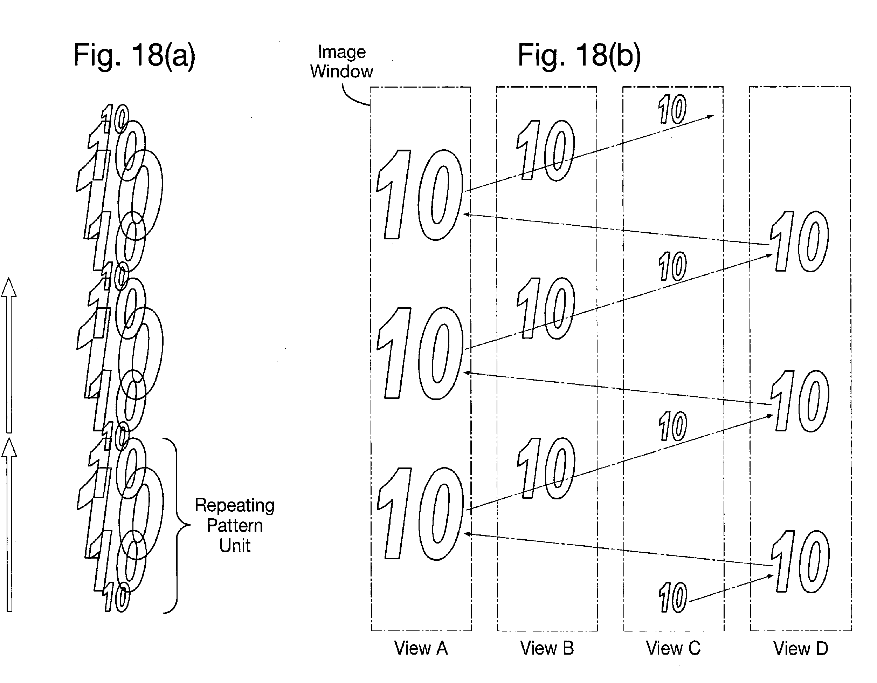

Figure 17 shows a similar cross-section to that shown in Figure 15 but in this case the image strips are not registered to the lenticular lenses 2. This would occur when it is not possible or it is technically challenging to control the registration and therefore it is not possible to control which part of the animation sequence is seen at which view. In the example in Figure 17 image 3 is now seen at view A and image 1 is now seen at view C etc. However unlike the example of Figures 4 to 8 this does not result in an undesirable animation sequence in the final security device i.e. each successive view features the successive neighbouring image element within the animation cycle and to this extent we maintain a contiguous animation - there are no jumps or discontinuities in the visual sequence. The overall sequence is illustrated in Figure 18a. Although the viewer observes a different starting point in View A (Figure 18b), image 3 which represents the fully expanded image, he then observes a gradual contraction followed by expansion back to the initial starting point as he changes from view A through to view D and then back to View A.

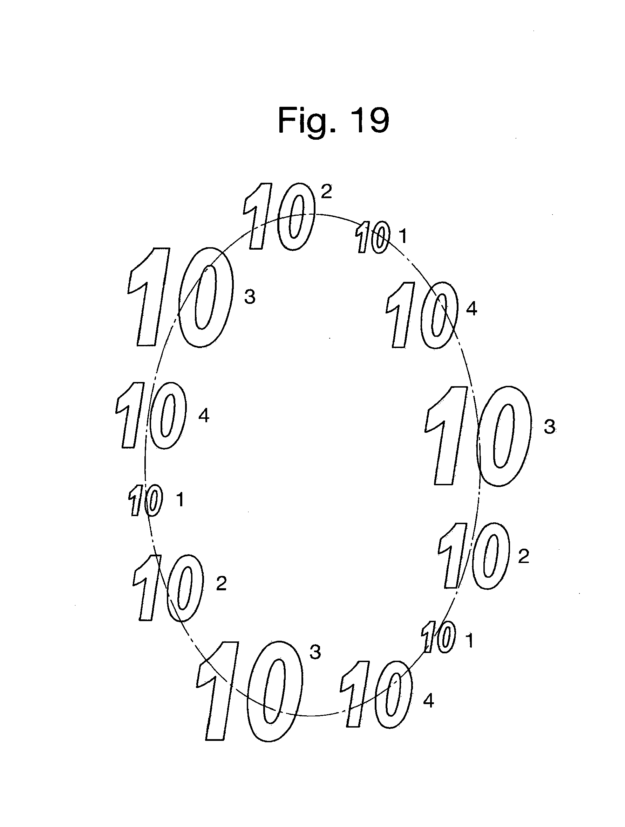

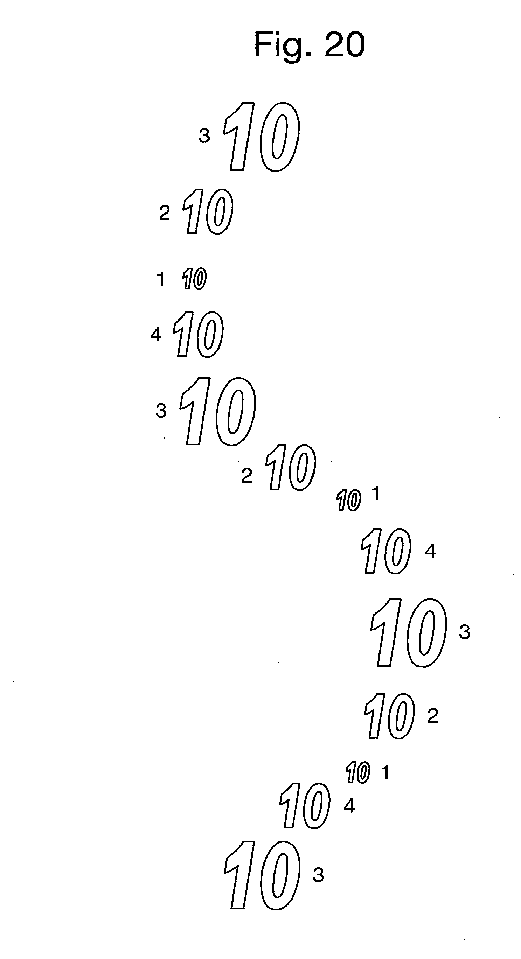

Figure 19 and 20 show two further examples of animation sequences, showing a combination of movement and contraction/expansion, which could be used in the current invention.

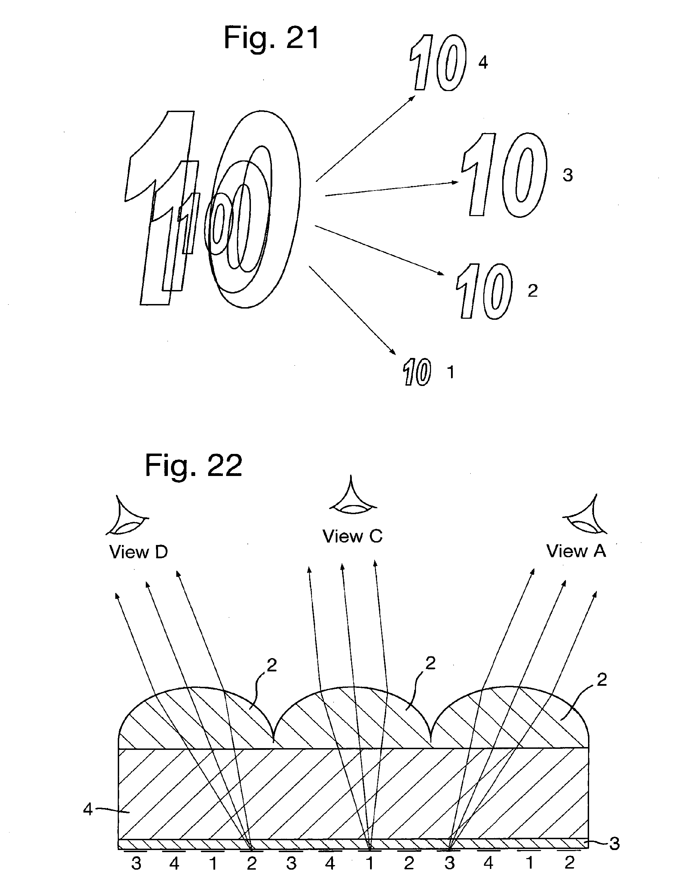

It is not necessary that the animation sequence involves movement and Figure 21 shows an alternative image animation sequence where there is solely an expansion and contraction step within the same area on the security device of images representing numeral "10". In this case there are four animation steps 1-4 creating an expanding and contracting numeral "10". This type of device will be described as a pumping device.

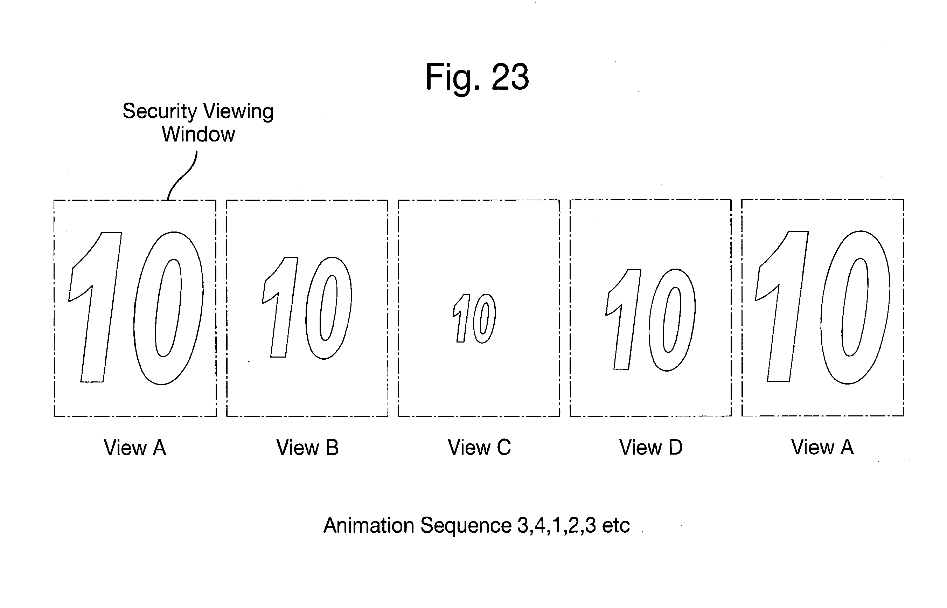

Figure 22 shows a cross-section for a lenticular device used to view the animation sequence in Figure 21 and illustrated schematically in Figure 23 through four views A to D for the case where the image strips are not registered to the lenticular lenses, i.e. image 1 does not correspond to view A so that the first image is not the smallest image. In the example in Figure 21 image 3 is now seen at view A and image 1 is now seen at view C etc.

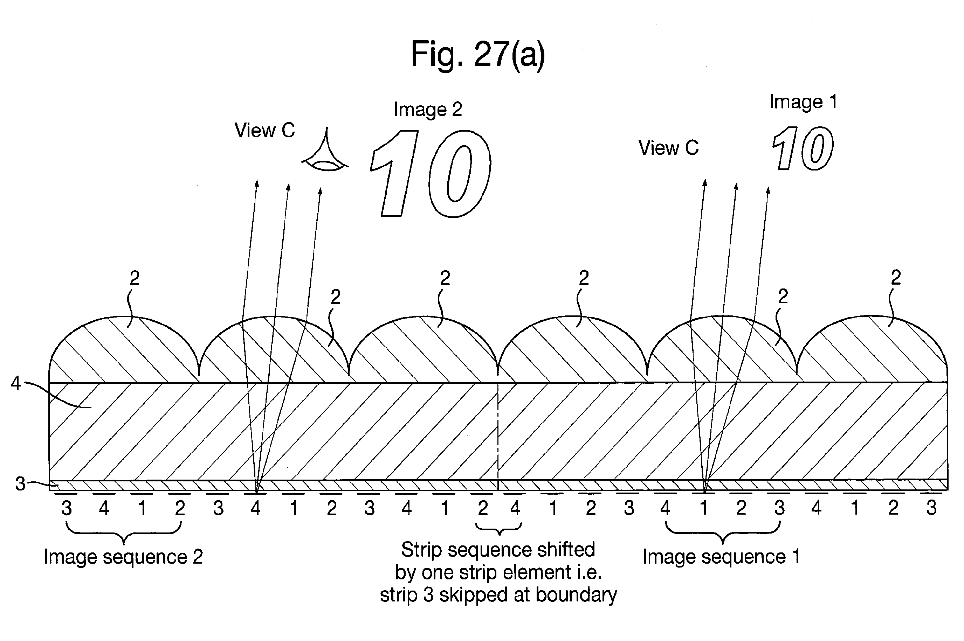

Whilst the examples described provide a simple way for an observer to validate the device by noting a cyclic expansion-contraction animation, in a further example the security device could provide two viewing sequences which show related but different expansion-contraction cycles between two devices. For example, the two viewing sequencies could show directly opposite contraction/expansion cycles, i.e. one is expanding while the other is contracting. Alternatively the two viewing sequencies could expand-contract in the same, direction but be out of step with each other. This provides a very valuable device in view of its ease of verification and the fact that the feature being verified, which is the known relationship between the two devices, does not require exact registration between the image strips and the focussing elements. Figure 27a shows the cross-section of a lenticular device which creates two different but related animation sequences (image sequence 1 and image sequence 2) in which the animation sequence for image area 1 is shifted by one strip element to create the animation sequence in image area 2. Typically, the same lenticular lenses 2 will be used for each image area but with the different arrangement of image strips 1-4. This makes it easier to compare the two image sequences. However, it would also be possible to use two different lenticular devices.

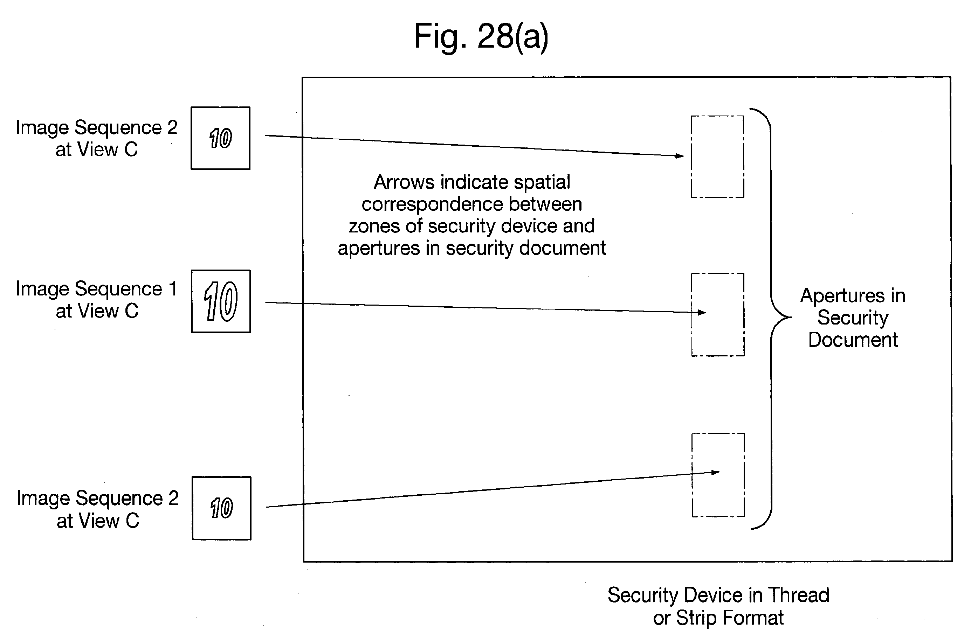

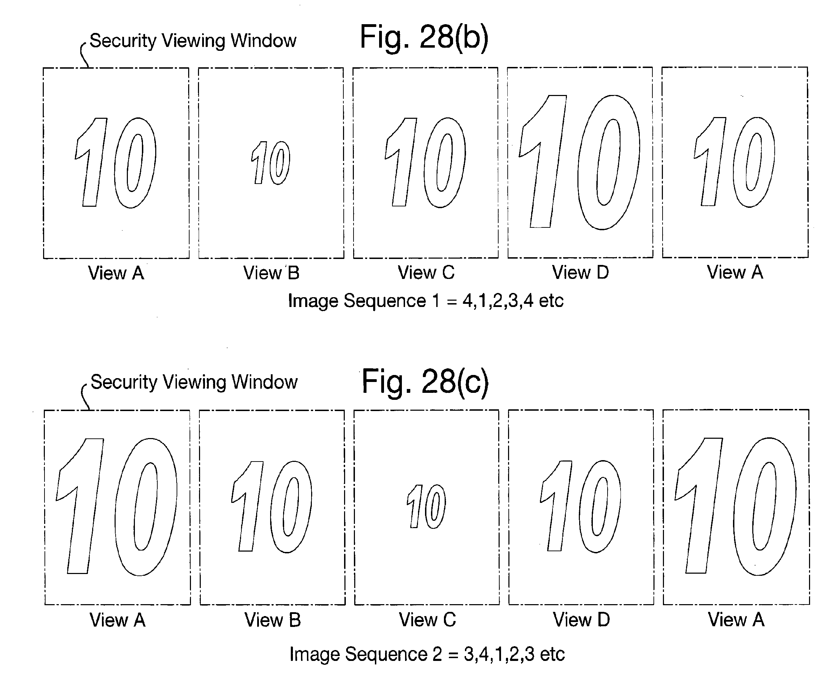

Figure 28a shows the example of a windowed security thread where the image strips forming the different but related animation sequences are periodically repeated along the long axis of the thread or strip such that image sequence 1 and image sequence 2 are viewable in alternate windows of the security document. As with previous embodiments the image sequences are seen on tilting the device. Figures 28b and 28c shows image sequence 1 and 2 through four views A-D. The animation is solely an expansion/contraction effect as described in relation to Figure 23. It can be seen that image sequence 1 has been shifted by one animation step relative to image sequence 2. This is achieved by breaking the strip sequence at the boundary between the two image sequences such that for a respective view the strip sequence for image sequence 2 is one strip ahead of the strip sequence for image sequence 1. For example from view C animation step 1 will be visible in image sequence 2 and animation step 4 is visible in image sequence 2.

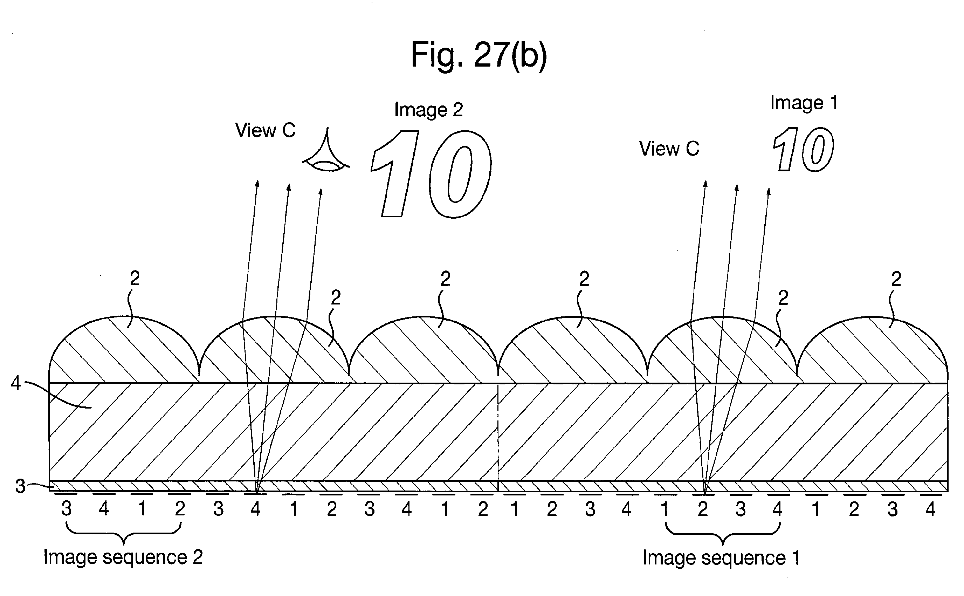

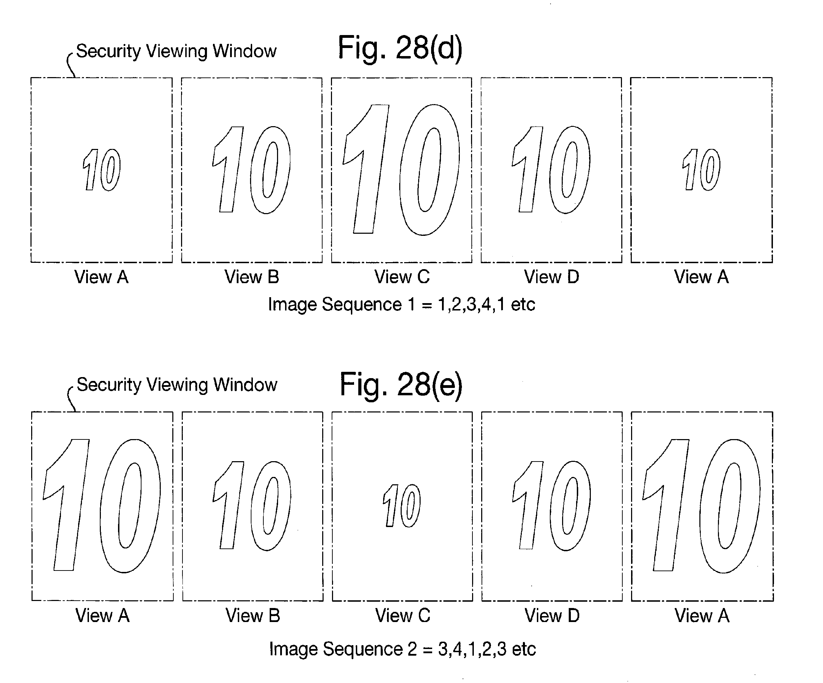

The related sequences shown in Figures 28b and 28c are for illustration only and in practice the animation sequences could be out of step by more than one image strip or the sequences could animate in the opposite manner. Figure 27b shows the cross-section of a lenticular device which creates two different sequences in which the animation sequence for image area 1 is directly the opposite of the animation sequence for image area 2, i.e. one is expanding while the other is contracting. Figures 28d and 28e shows image sequence 1 and 2 through four views A-D for the lenticular device in Figure 27. For example from view C animation step 3 (representing the fully expanded image) will be visible in image sequence 1 and animation step 1 (representing the fully contracted image) is visible in image sequence 2.

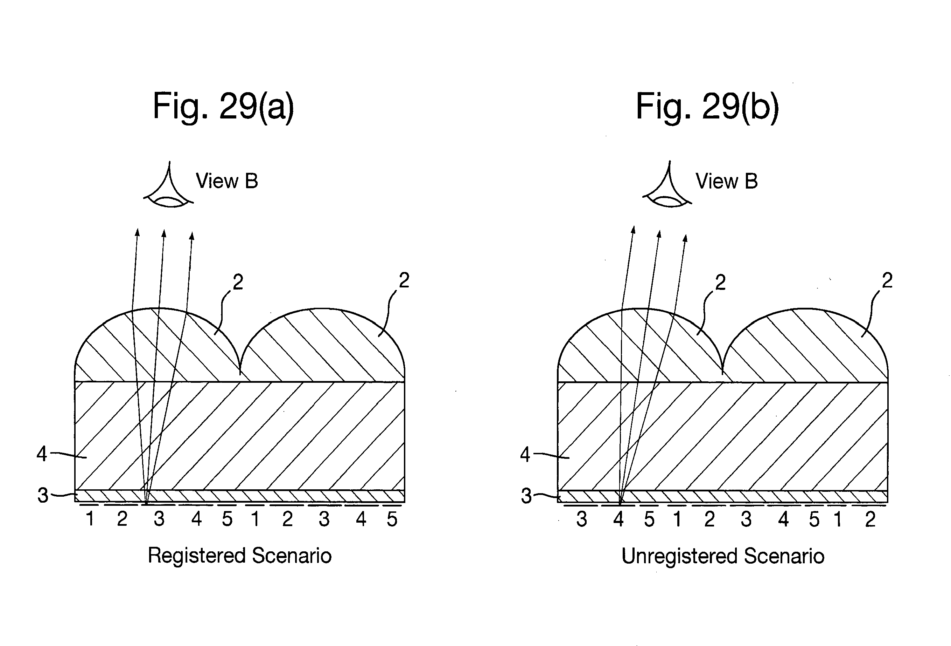

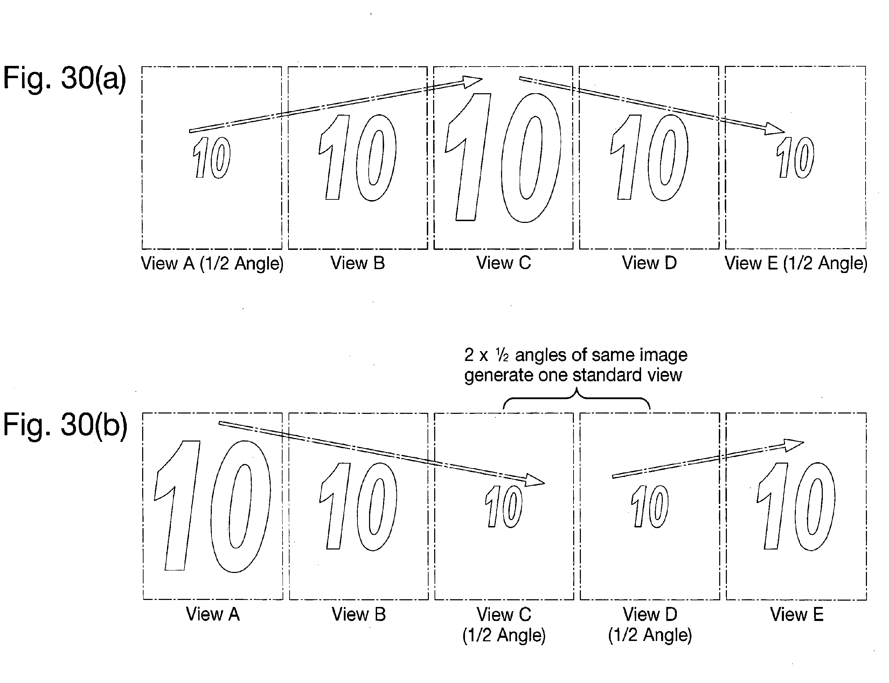

In the previous examples of the invention, the image strips defining the first image in a sequence, image 1, have also defined the last image in the preceding sequence. An alternative approach is shown in Figure 29a. In this approach, the end most image strips have half the width of the other image strips (image strips 1 and 5 in Figure 29a) and define the same image form. The effect of this is that as the device is tilted and the view E is reached (Figure 30a) this view will only be seen over half the viewing angle as compared with the viewing angles B, C, D which as before are equal. However, since the next image strip 1 is also half width, this will also be seen over half the angle as compared with views B-D with the result that the smallest image will be seen over the same angle as the other images and hence the viewer will see a continuous variation in the image form as he tilts the device at a steady rate. In this example, the image is a numeral "10" which varies in size through the sequence.

Figure 29b illustrates the same arrangement of image strips but unregistered with the lenticular lenses 2. The appearance of this sequence is as shown in Figure 30b and again the total angle through which the smallest version of numeral "10" is visible corresponding to view C and view D is equal to the total angle of each of views A, B and E.

In all the examples, the cylindrical microlenses 2 and image strip sets typically have a repeat distance in the range 5-200µm, more preferably 10-60µm and even more preferably 20-40µm. They are typically formed by UV cast-cure replication or thermal embossing. The number of image strips in each image strip set is preferably in the range 4-30.

In the examples above, the image strips are printed by gravure or other suitable printing method onto the underside of the substrate 4 either directly or on to an intermediate layer 3. The image strips will have typical widths less than 50 microns, preferably less than 20 microns, most preferably in the range 1-10 microns. For the situation where the strips are directly printed then it is anticipated that the minimum line width will be 10um, exceptionally 5um and very exceptionally 1um.

Typical thicknesses of security devices according to the invention are 2-100 microns, more preferably 20-50microns with lens curvature and focal length adjusted to have a focal plane coincident with the plane of the image strips.

The devices shown in Figures 5-23 and 27 can be used as a stand alone device such as a label affixed to a security document or the like but could also form an integral part of a security document, with the substrate of the lenticular device corresponding to the substrate of the document. The device would therefore need to be located in or on a transparent portion or window of the substrate such as a banknote.

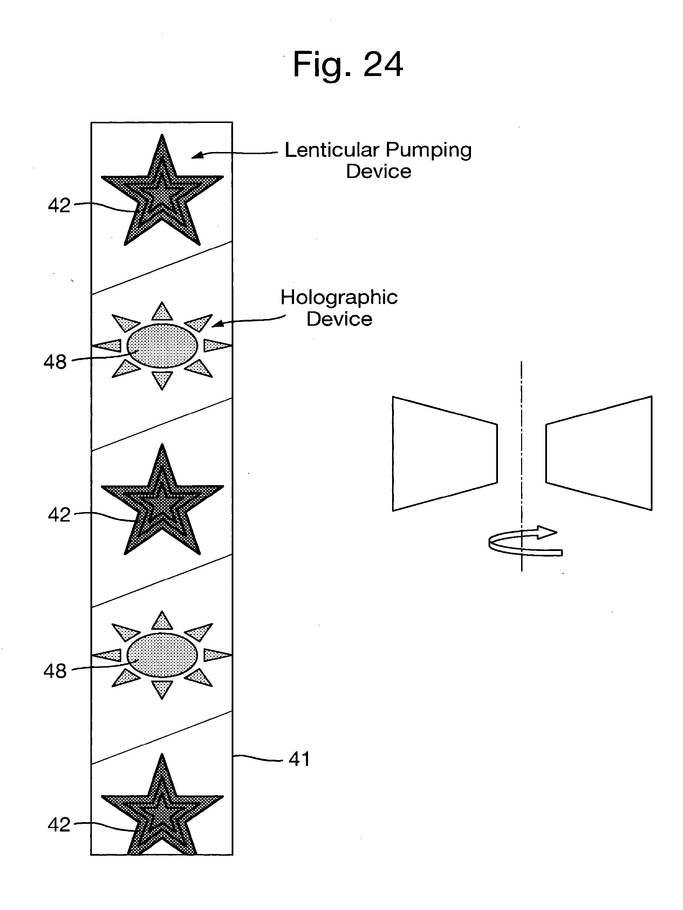

Figure 24 illustrates another example of a security device according to the invention. This is in the form of a security thread 41 having three lenticular pumping devices 42 in the form shown in Figure 23 and two holographic devices 48 embossed into a substrate of the thread 41.

As the security thread 41 is tilted, the holographic generating structures 48 will replay respective holograms in a conventional manner. As can be seen, the lenticular devices 42 are defined such that when the security thread 41 is tilted about its elongate axis, the star will proceed through a cyclic expansion-contraction sequence as discussed in relation to Figure 23.

In these examples, the substrate 4 is typically a transparent polymeric material, for example bi-axial PET or polypropylene.

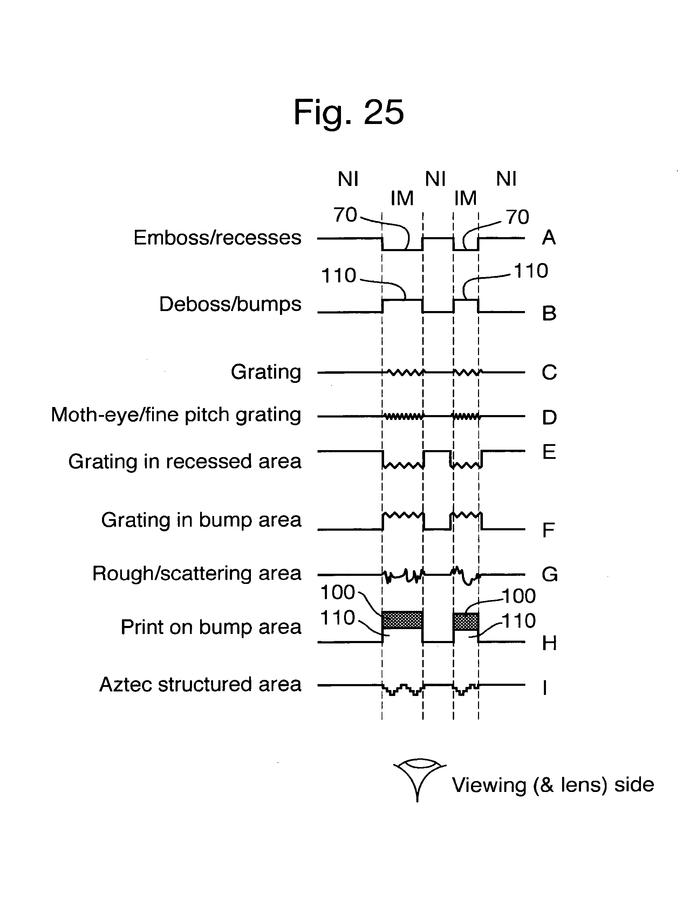

As explained above, typically the image strips are printed onto the substrate. However, the image strips can also be formed as a relief structure and a variety of different relief structures suitable for this are shown in Figure 25.

Thus, Figure 25A illustrates image regions of the strips (IM) in the form of embossed or recessed lines while the non-embossed lines correspond to the non-imaged regions of the strips (NI) Figure 25B illustrates image regions of the strips in the form of debossed lines or bumps.

In another approach, the relief structures can be in the form of diffraction gratings (Figure 25C) or moth-eye/fine pitch gratings (Figure 25D).

The recesses or bumps of Figures 25A and 25B can be further provided with gratings as shown in Figures 25E and 25F respectively.

Figure 25G illustrates the use of a simple scattering structure providing an achromatic effect.

Further, as explained above, in some cases the recesses 70 of Figure 25A could be provided with an ink or the debossed regions or bumps 110 could be provided with an ink. The latter is shown in Figure 25H where ink layers 100 are provided on bumps 110.

Figure 25I illustrates the use of an Aztec structure.

Additionally, image and non-image areas could be defined by combinations of different elements types, e.g. the image areas could be formed from moth-eye structures whilst the non-image areas could be formed from a grating. Or even the image and non-image areas could be formed by gratings of different pitch or orientation.

The height or depth of the bumps/recesses is preferably in the range 0.5-10µm and more preferably in the range 1-5µm. The width of the image strip and therefore the width of the bumps or recesses will be dependent on the type of optical effect required but for a smooth animation effect it is preferable to have as many views as possible typically at least three but ideally as many as 30, in this case the width of the image strips (and associated bumps or recesses) should be in the range 0.1 - 10µm.

In other examples (not shown), one or more of the holographic generating structures 48 in Figure 24 could be replaced by moire magnification structures which could be either 2D or 1D structures. 2D moire magnification structures are described in more detail in EP-A-1695121 and WO-A-94/27254.

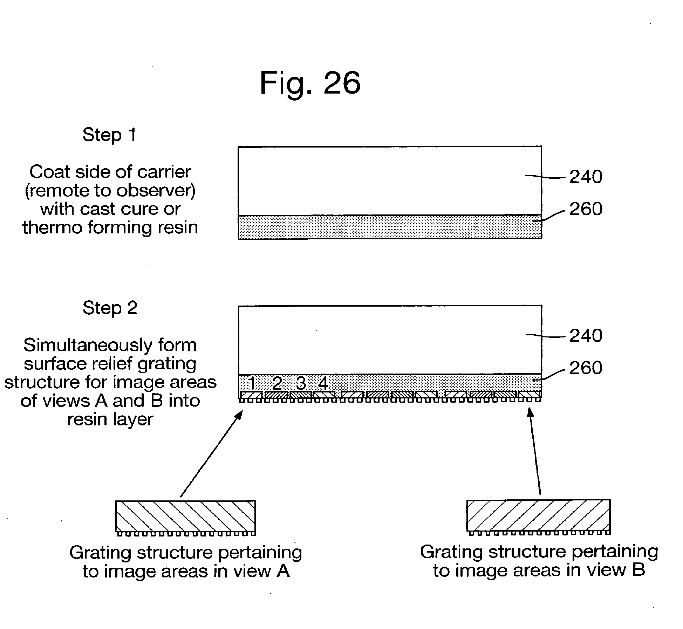

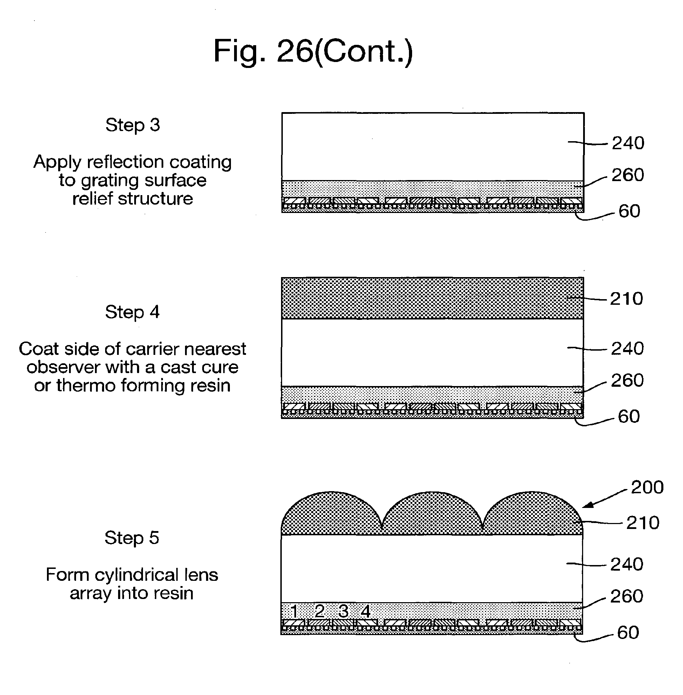

An example of a method for manufacturing devices in which the image strips are provided as a relief will now be described with reference to Figure 26. In step 1, a carrier layer 240 is coated with cast-cure or thermoforming transparent resin layer 260 (step 1) corresponding to the layer 3 in previous examples.

Sets of four image strips, labelled 1-4, and comprising different diffractive surface relief structures are then simultaneously formed by embossing into the exposed surfaces of the resin layer 260 (step 2). These strips correspond to animation steps 1-4 in any of the proceeding examples. Any number of image strips and therefore animation steps can be used but in practice at least three is necessary to create a movement effect and more preferably between 4 and 30.

The use of different grating structures for the image regions provides a visual contrast between the different views due to the different diffractive colour effects and therefore in the final device the image will change colour as it moves. This difference is not essential and the image regions could be defined by the same diffractive grating structure.

A reflection coating layer is then provided over the grating surface relief structure (step 3). This reflection coating can be a metallisation or a high refractive index layer. The use of high refractive index materials, typically inorganic, are well known in the art and described in US4856857. Typical examples of materials suitable for the high refractive index layer include zinc sulphide, titanium dioxide and zirconium dioxide. Replacing the vapour deposited metal reflection enhancing layer with a transparent hri layer is particularly beneficial when the security device of the current invention is applied over transparent regions (typically known as apertures or windows) of secure documents.

The other side of the carrier layer 240 is then coated with a cast-cure or thermoforming transparent resin 210 (step 4) and then a set of cylindrical lenses 200 are embossed into the layer 210 (step 5) so as to be in register with the strips A and B. Of course, in other cases registration between the lenses 200 and strips A and B is not necessary, as previously explained.

In the examples described above, cylindrical lenses have been used as the lenticular focusing elements. It should be understood, however, that they could be replaced by micromirrors.

The security device of the current invention can be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

The security device of the current invention may also comprise additional security features such as any desired printed images, metallic layers which may be opaque, semitransparent or screened. Such metallic layers may contain negative or positive indicia created by known demetallisation processes.

Additional optically variable materials can be included in the security device such as thin film interference elements, liquid crystal material and photonic crystal materials. Such materials may be in the form of filmic layers or as pigmented materials suitable for application by printing.

The presence of a metallic layer can be used to conceal the presence of a machine readable dark magnetic layer. The presence of a magnetic layer under a metallic layer is well known in security threads and for example is described in WO03061980, EP0516790, WO9825236, and WO9928852. When a magnetic material is incorporated into the device the magnetic material can be applied in any design but common examples include the use of magnetic tramlines or the use of magnetic blocks to form a coded structure. Suitable magnetic materials include iron oxide pigments (Fe₂O₃ or Fe₃O₄), barium or strontium ferrites, iron, nickel, cobalt and alloys of these. In this context the term "alloy" includes materials such as Nickel:Cobalt, Iron:Aluminium:Nickel:Cobalt and the like. Flake Nickel materials can be used; in addition Iron flake materials are suitable. Typical nickel flakes have lateral dimensions in the range 5-50 microns and a thickness less than 2 microns. Typical iron flakes have lateral dimensions in the range 10-30 microns and a thickness less than 2 microns.

In an alternative machine-readable embodiment a transparent magnetic layer can be incorporated at any position within the device structure. Suitable transparent magnetic layers containing a distribution of particles of a magnetic material of a size and distributed in a concentration at which the magnetic layer remains transparent are described in WO03091953 and WO03091952.

In a further example the security device of the current invention may be incorporated in a security document such that the device is incorporated in a transparent region of the document. The security document may have a substrate formed from any conventional material including paper and polymer. Techniques are known in the art for forming transparent regions in each of these types of substrate. For example, WO8300659 describes a polymer banknote formed from a transparent substrate comprising an opacifying coating on both sides of the substrate. The opacifying coating is omitted in localised regions on both sides of the substrate to form a transparent region.

If the security device of the current invention is to be used on a secure document formed from a transparent substrate such as a polymer banknote then the device may be formed separately from the secure document and adhered or transferred to the secure document using known techniques. Alternatively the device could be incorporated into the secure document formed from a transparent substrate by using the transparent substrate as an integral part of the security device. For example the lenticular focussing elements could be formed in or applied onto one side of the secure substrate by directly embossing cylindrical lenses into the substrate or coating the substrate with a cast-cure or thermoforming resin and then casting or embossing a set of cylindrical lenses into this layer. Likewise the image strips could be formed in or applied onto the opposite side of the secure substrate using printing or any of the structures referred to in relation to Figure 25.

EP1141480 describes a method of making a transparent region in a paper substrate. Other methods for forming transparent regions in paper substrates are described in EP0723501, EP0724519, EP1398174 and WO03054297.

## Claims

1. A security device having a lenticular device comprising an array of lenticular focusing elements; a corresponding array of sets of image strips, the sets of image strips having substantially the same periodicity as, or an integral multiple of the periodicity of, the array of lenticular focusing elements, wherein the image strips are formed and the focusing elements located relative to the image strips such that at each of a plurality of viewing angles, a respective one image strip from each set is viewed in response to incident light falling on a respective lenticular focusing element, and **characterised by** the image strips being constructed such that the device presents a cyclically repeating sequence of images as the device is viewed at successive viewing angles, the image sequence comprising a change in form of an image between a first form and a second form and then a reversal of the sequence back to the first form, the combined image sequences presenting a contiguous variation in the image form.

2. A security device according to claim 1, wherein the image strips defining the first form of the image at the end of one sequence also define the first form of the image at the beginning of the next sequence.

3. A security device according to claim 1, wherein the image strips at the beginning and end of each sequence have half the width of the other image strips.

4. A device according to any of the preceding claims, wherein the cyclically repeating image sequence comprises one of an expansion of an image followed by a contraction, a change in shape of an image from a first shape to a second shape and then back to the first shape, and a combination of an expansion in size of an image together with a change in shape of that image followed by a contraction of the image and a change in shape of the image back to the original image size and shape.

5. A device according to any of the preceding claims, wherein the image strips define at least one intermediate image from between the first form and the second form and between the second form and the first form.

6. A device according to any of the preceding claims, wherein the array of lenticular focusing elements is not registered with the array of sets of image strips.

7. A security device according to any of the preceding claims, wherein the image strips are defined by inks, or by a relief structure, wherein the relief structure is preferably embossed into, or cast onto, a substrate, and wherein the relief structure preferably comprises diffractive grating structures.

8. A security device according to any of the preceding claims, wherein the width of each image strip is less than 50 microns, preferably less than 20 microns, most preferably in the range 1-10 microns.

9. A security device according to any of the preceding claims, wherein more than one set of image strips is provided in correspondence with each focusing element.

10. A security device according to any of the preceding claims, wherein the lenticular focusing elements comprise cylindrical lenses or micromirrors.

11. A security device according to any of the preceding claims, wherein the lenticular focusing element array and the sets of image strips have a periodicity in the range 5-200 microns, preferably 10-60 microns, most preferably 20-40 microns.

12. A security device according to any of the preceding claims, wherein the f number for the lenticular focussing elements is in the range 0.25-16 and, preferably 0.5-2.

13. A security device according to any of the preceding claims, wherein the image strips are provided in a substrate which is also provided with a holographic structure, separate from the lenticular device.

14. A security device according to any of the preceding claims, wherein the image strips are provided in a substrate which is also provided with microimages suitable for moire magnification, the security device further comprising a moire magnification lens array located over the microimages, wherein the moire magnification lens array is preferably provided in or on the same surface as the lenticular focusing elements.

15. A security device according to any of the preceding claims, the device including a layer incorporating a machine-readable material, such as magnetic material, preferably magnetite.

16. An article provided with a security device according to any of the preceding claims, the article being preferably selected from banknotes, cheques, passports, identity cards, certificates of authenticity, fiscal stamps and other documents for securing value or personal identity.

17. An article according to claim 16, wherein the article comprises a substrate with a transparent portion on opposite sides of which the lenticular focusing elements and image strips respectively are provided.

18. A method of manufacturing a security device, the method comprising providing a lenticular device comprising an array of lenticular focusing elements and a corresponding array of sets of image strips, the sets of image strips having substantially the same periodicity as, or an integral multiple of the periodicity of, the array of lenticular focusing elements, wherein the image strips are formed and the focusing elements located relative to the image strips such that at each of a plurality of viewing angles, a respective one image strip from each set is viewed in response to incident light falling on a respective lenticular focusing element, and **characterised by** the image strips being constructed such that the device presents a cyclically repeating sequence of images as the device is viewed at successive viewing angles, the image sequence comprising a change in form of an image between a first form and a second form and then a reversal of the sequence back to the first form, the combined image sequences presenting a contiguous variation in the image form.

19. A method according to claim 18, wherein the image strips are printed onto a substrate of the security device, or wherein the image strips are defined by a relief structure embossed or cast-cured into a substrate of the security device.

## Patentansprüche

1. Sicherheitsvorrichtung mit einer linsenförmigen Vorrichtung, die eine Anordnung linsenförmiger Fokussierelemente; eine entsprechende Anordnung von Sätzen von Bildstreifen, wobei die Sätze von Bildstreifen im Wesentlichen die gleiche Periodizität wie, oder ein integrales Vielfaches der Periodizität von aufweisen, die Anordnung linsenförmiger Fokussierelemente umfasst, wobei die Bildstreifen geformt und die Fokussierelemente relativ zu den Bildstreifen positioniert sind, derartig, dass an jedem einer Vielzahl von Betrachtungswinkeln, ein jeweiliger Bildstreifen von jedem Satz als Reaktion auf einfallendes Licht betrachtet wird, das auf ein jeweiliges linsenförmiges Fokussierelement fällt und **dadurch gekennzeichnet, dass** die Bildstreifen derartig konstruiert sind, dass die Vorrichtung eine sich zyklisch wiederholende Sequenz von Bildern präsentiert, sowie die Vorrichtung an aufeinander folgenden Betrachtungswinkeln betrachtet wird, wobei die Bildsequenz eine Änderung in der Form eines Bildes zwischen einer ersten Form und einer zweiten Form und danach eine Umkehr der Sequenz zurück zur ersten Form umfasst, wobei die kombinierten Bildsequenzen eine zusammenhängende Variation der Bildform präsentieren.

2. Sicherheitsvorrichtung nach Anspruch 1, wobei die Bildstreifen, welche die erste Form des Bildes am Ende einer Sequenz definieren, außerdem die erste Form des Bildes am Anfang der nächsten Sequenz definieren.

3. Sicherheitsvorrichtung nach Anspruch 1, wobei die Bildstreifen am Anfang und Ende jeder Sequenz die Hälfte der Breite der anderen Bildstreifen aufweisen.

4. Vorrichtung nach irgendeinem der vorhergehenden Ansprüche, wobei die sich zyklisch wiederholende Bildsequenz eins der Folgenden umfasst, d. h. eine Expansion eines Bildes gefolgt von einer Kontraktion, eine Änderung der Form eines ersten Bildes von einer ersten Form in eine zweite Form und danach zurück zur ersten Form, und einer Kombination von einer Expansion an Größe eines Bildes zusammen mit einer Änderung der Form jenes Bildes, gefolgt von einer Kontraktion des Bildes und einer Änderung der Form des Bildes zurück zu seiner ursprünglichen Bildgröße und Bildform.

5. Vorrichtung nach irgendeinem der vorhergehenden Ansprüche, wobei die Bildstreifen wenigstens ein Zwischenbild ab zwischen der ersten Form und der zweiten Form und zwischen der zweiten Form und der ersten Form definieren.

6. Vorrichtung nach irgendeinem der vorhergehenden Ansprüche, wobei die Anordnung der linsenförmigen Fokussierelemente nicht mit der Anordnung von Sätzen von Bildstreifen registriert ist.

7. Sicherheitsvorrichtung nach irgendeinem der vorhergehenden Ansprüche, wobei die Bildstreifen durch Tinten, oder durch eine Reliefstruktur definiert sind, wobei die Reliefstruktur vorzugsweise in ein Substrat geprägt, oder darauf gegossen, ist und, wobei die Reliefstruktur vorzugsweise lichtbrechende Gitterstrukturen umfasst.

8. Sicherheitsvorrichtung nach irgendeinem der vorhergehenden Ansprüche, wobei die Breite jedes Bildstreifens weniger als 50 Mikron, vorzugsweise weniger als 20 Mikron, noch bevorzugter im Bereich 1-10 Mikron liegt.

9. Sicherheitsvorrichtung nach irgendeinem der vorhergehenden Ansprüche, wobei mehr als ein Satz von Bildstreifen im Zusammenhang mit jedem Fokussierelement bereitgestellt wird.

10. Sicherheitsvorrichtung nach irgendeinem der vorhergehenden Ansprüche, wobei die linsenförmigen Fokussierelemente zylindrische Linsen oder Mikrospiegel umfassen.

11. Sicherheitsvorrichtung nach irgendeinem der vorhergehenden Ansprüche, wobei die Anordnung der linsenförmigen Fokussierelemente und die Sätze von Bildstreifen eine Periodizität im Bereich 5-200 Mikron, vorzugsweise 10-60 Mikron, noch bevorzugter 20-40 Mikron aufweisen.

12. Sicherheitsvorrichtung nach irgendeinem der vorhergehenden Ansprüche, wobei die f Zahl für die linsenförmigen Fokussierelemente im Bereich 0,25-16 und, vorzugsweise, 0,5-2 liegt.

13. Sicherheitsvorrichtung nach irgendeinem der vorhergehenden Ansprüche, wobei die Bildstreifen in einem Substrat bereitgestellt werden, das außerdem mit einer holografischen Struktur, separat von der linsenförmigen Vorrichtung, versehen ist.

14. Sicherheitsvorrichtung nach irgendeinem der vorhergehenden Ansprüche, wobei die Bildstreifen in einem Substrat bereitgestellt sind, das außerdem mit Mikrobildern versehen ist, die für Moire-Vergrößerung geeignet sind, wobei die Sicherheitsvorrichtung ferner eine Moire-Vergrößerungslinse umfasst, die sich über den Mikrobildern befindet, wobei die Anordnung der Moiré-Vergrößerungslinsen vorzugsweise in oder auf der gleichen Oberfläche wie die linsenförmigen Fokussierelemente bereitgestellt ist.

15. Sicherheitsvorrichtung nach irgendeinem der vorhergehenden Ansprüche, wobei die Vorrichtung eine Schicht einschließt, die maschinenlesbares Material, wie beispielsweise magnetisches Material, vorzugsweise Magnetit, enthält.

16. Gegenstand, der mit einer Sicherheitsvorrichtung nach einem beliebigen der vorhergehenden Ansprüche versehen ist, wobei der Gegenstand vorzugsweise aus Banknoten, Schecks, Reisepässen, Kennkarten, Echtheitszertifikaten, Steuermarken und anderen Dokumenten zur Sicherung von Wert oder persönlicher Identität selektiert wurde.

17. Gegenstand nach Anspruch 16, wobei der Gegenstand ein Substrat mit einem transparenten Teil auf gegenüber liegenden Seiten umfasst, auf denen die linsenförmigen Fokussierelemente bzw. die Bildstreifen bereitgestellt sind.

18. Verfahren zur Herstellung einer Sicherheitsvorrichtung, wobei das Verfahren die Bereitstellung einer linsenförmigen Vorrichtung umfasst, die eine Anordnung linsenförmiger Fokussierelemente und eine entsprechende Anordnung von Sätzen von Bildstreifen umfasst, wobei die Sätze von Bildstreifen im Wesentlichen die gleiche Periodizität wie, oder ein integrales Vielfaches der Periodizität von aufweisen, die Anordnung linsenförmiger Fokussierelemente, wobei die Bildstreifen geformt und die Fokussierelemente relativ zu den Bildstreifen positioniert sind, derartig, dass an jedem einer Vielzahl von Betrachtungswinkeln, ein jeweiliger Bildstreifen von jedem Satz als Reaktion auf einfallendes Licht betrachtet wird, das auf ein jeweiliges linsenförmiges Fokussierelement fällt und **dadurch gekennzeichnet, dass** die Bildstreifen derartig konstruiert sind, dass die Vorrichtung eine sich zyklisch wiederholende Sequenz von Bildern präsentiert, sowie die Vorrichtung an aufeinander folgenden Betrachtungswinkeln betrachtet wird, wobei die Bildsequenz eine Änderung in der Form eines Bildes zwischen einer ersten Form und einer zweiten Form und danach eine Umkehr der Sequenz zurück zur ersten Form umfasst, wobei die kombinierten Bildsequenzen eine zusammenhängende Variation der Bildform präsentieren.

19. Verfahren nach Anspruch 18, wobei die Bildstreifen auf ein Substrat der Sicherheitsvorrichtung gedruckt sind, oder wobei die Bildstreifen durch eine Reliefstruktur definiert sind, die in ein Substrat der Sicherheitsvorrichtung geprägt oder Guss-gehärtet ist.

## Revendications

1. Dispositif de sécurité ayant un dispositif lenticulaire comprenant un réseau d'éléments lenticulaires de mise au point, un réseau correspondant d'ensembles de bandes d'image, ces ensembles de bandes d'image ayant essentiellement la même périodicité que le réseau d'éléments lenticulaires de mise au point, ou un multiple entier de la périodicité de ce réseau, dans lequel les bandes d'image sont formées et les éléments de mise au point sont situés par rapport aux bandes d'image de manière à ce que, à chacun d'une pluralité d'angles de vision, une bande d'image respective de chaque ensemble est visualisée en réponse à une lumière incidente tombant sur un élément lenticulaire de mise au point respectif, et **caractérisé par le fait que** les bandes d'image sont construites de manière à ce que le dispositif présente une séquence d'images se répétant cycliquement tandis que le dispositif est vu à des angles de vision successifs, cette séquence d'images comprenant un changement de forme d'une image entre une première forme et une deuxième forme, puis une inversion de la séquence pour retourner à la première forme, les séquences d'images combinées présentant une variation contiguë de la forme de l'image.

2. Dispositif de sécurité selon la revendication 1, dans lequel les bandes d'image définissant la première forme de l'image à la fin d'une séquence définissent la première forme de l'image au commencement de la séquence suivante.

3. Dispositif de sécurité selon la revendication 1, dans lequel les bandes d'image au commencement et à la fin de chaque séquence ont la moitié de la largeur des autres bandes d'image.

4. Dispositif selon l'une quelconque des revendications précédentes, dans lequel la séquence d'images se répétant cycliquement comprend soit un agrandissement d'une image suivi d'une contraction, soit un changement de forme d'une image d'une première forme à une deuxième forme suivi de son retour à la première forme, soit une combinaison d'un agrandissement de la taille d'une image et d'un changement de forme de cette image suivis d'une contraction de l'image et d'un retour de la forme de limage à la taille et à la forme d'origine de l'image.

5. Dispositif selon l'une quelconque des revendications précédentes, dans laquelle les bandes d'image définissent au moins une image intermédiaire depuis entre le première forme et la deuxième forme et entre la deuxième forme et la première forme.

6. Dispositif selon l'une quelconque des revendications précédentes, dans lequel le réseau d'éléments lenticulaires de mise au point n'est pas en registre avec le réseau d'ensembles de bandes d'image.

7. Dispositif de sécurité selon l'une quelconque des revendications précédentes, dans lequel les bandes d'image sont définies par des encres, ou par une structure en relief, cette structure en relief étant de préférence estampée dans, ou coulée sur un substrat, et cette structure en relief comprenant de préférence des structures à réseau diffractif.

8. Dispositif de sécurité selon l'une quelconque des revendications précédentes, dans lequel la largeur de chaque bande d'image est moins que 50 microns, de préférence moins que 20 microns, et, ce qui est le plus préférable, située dans la plage de 1 à 10 microns.

9. Dispositif de sécurité selon l'une quelconque des revendications précédentes, dans lequel plus qu'un jeu de bandes d'image est prévu en correspondance avec chaque élément de mise au point.

10. Dispositif de sécurité selon l'une quelconque des revendications précédentes, dans lequel les éléments lenticulaires de mise au point consistent en des lentilles cylindriques ou en des micromiroirs.

11. Dispositif de sécurité selon l'une quelconque des revendications précédentes, dans lequel le réseau d'éléments lenticulaires de mise au point et les ensembles de bandes d'image ont une périodicité située dans la plage de 5 à 200 microns, de préférence de 10 à 60 microns, et, ce qui est le plus préférable, de 20 à 40 microns.

12. Dispositif de sécurité selon l'une quelconque des revendications précédentes, dans lequel le nombre d'ouverture pour les éléments lenticulaires de mise au point est situé dans la plage de 0,25 à 16 et, de préférence, de 0,5 à 2.

13. Dispositif de sécurité selon l'une quelconque des revendications précédentes, dans lequel les bandes d'image sont fournies dans un substrat qui est aussi pourvu d'une structure holographique, séparée du dispositif lenticulaire.

14. Dispositif de sécurité selon l'une quelconque des revendications précédentes, dans lequel les bandes d'image sont fournies dans un substrat qui est aussi pourvu de micro-images appropriées pour un grossissement par effet de moiré, ce dispositif de sécurité comprenant en outre un réseau de lentilles de grossissement par effet de moiré, ce réseau de lentilles de grossissement par effet de moiré étant prévu de préférence dans ou sur la même surface que les éléments lenticulaires de mise au point.

15. Dispositif de sécurité selon l'une quelconque des revendications précédentes, ce dispositif comprenant une couche incorporant un matériau lisible par machine, tel qu'un matériau magnétique, de préférence de la magnétite.

16. Article pourvu d'un dispositif de sécurité selon l'une quelconque des revendications précédentes, cet article étant de préférence choisi parmi des billets de banque, des chèques, des passeports, des cartes d'identité, des certificats d'authenticité, des timbres fiscaux et d'autres documents pour sécuriser une valeur ou une identité personnelle.

17. Article selon la revendication 16, cet article comprenant un substrat avec une partie transparente sur les côtés opposés de laquelle les éléments lenticulaires de mise au point et les bandes d'image sont prévues respectivement.

18. Procédé de fabrication d'un dispositif de sécurité, ce procédé comprenant la fourniture d'un dispositif lenticulaire comprenant un réseau d'éléments lenticulaires de mise au point et un réseau correspondant d'ensembles de bandes d'image, ces ensembles de bandes d'image ayant essentiellement la même périodicité que le réseau d'éléments lenticulaires de mise au point, ou un multiple entier de la périodicité de ce réseau, dans lequel les bandes d'image sont formées et les éléments de mise au point sont situés par rapport aux bandes d'image de manière à ce que, à chacun d'une pluralité d'angles de vision, une bande d'image respective de chaque ensemble est visualisée en réponse à une lumière incidente tombant sur un élément lenticulaire de mise au point respectif, **caractérisé par le fait que** les bandes d'image sont construites de manière à ce que le dispositif présente un séquence d'images se répétant cycliquement tandis que le dispositif est vu à des angles de vision successifs, la séquence d'images comprenant un changement de forme d'une image entre une première forme et une deuxième forme, puis une inversion de la séquence pour retourner à la première forme, les séquences d'images combinées présentant une variation contiguë dans la forme de l'image.

19. Procédé selon la revendication 18, dans lequel les bandes d'image sont imprimées sur un substrat du dispositif de sécurité, ou dans lequel les bandes d'image sont définies par une structure en relief estampée ou coulée-durcie dans un substrat du dispositif de sécurité.
